(19) 

Europäisches
Patentamt
European
Patent Office
Office européen
des brevets

(11) **EP 4 682 598 A1**

(12) **EUROPEAN PATENT APPLICATION**
published in accordance with Art. 153(4) EPC

(43) Date of publication:
**21.01.2026 Bulletin 2026/04**

(21) Application number: **24770351.5**

(22) Date of filing: **13.02.2024**

(51) International Patent Classification (IPC):
***G02B 6/02*** ^(2006.01)

(52) Cooperative Patent Classification (CPC):
**G02B 6/02**

(86) International application number:
**PCT/JP2024/004890**

(87) International publication number:
**WO 2024/190234 (19.09.2024 Gazette 2024/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.03.2023 JP 2023040847**

(71) Applicant: **Sumitomo Electric Industries, Ltd.
Osaka-shi, Osaka 541-0041 (JP)**

(72) Inventors:
• **SAKUMA Hirotaka
Osaka-shi, Osaka 541-0041 (JP)**

• **SUGANUMA Takahiro
Osaka-shi, Osaka 541-0041 (JP)**
• **HARUNA Tetsuya
Osaka-shi, Osaka 541-0041 (JP)**
• **KOBAYASHI Yuto
Osaka-shi, Osaka 541-0041 (JP)**
• **HAYASHI Tetsuya
Osaka-shi, Osaka 541-0041 (JP)**
• **HASEGAWA Takemi
Osaka-shi, Osaka 541-0041 (JP)**

(74) Representative: **TBK
Bavariaring 4-6
80336 München (DE)**

(54) **MULTICORE OPTICAL FIBER**

(57)    A multicore optical fiber (1) comprises a silica-based glass. The multicore optical fiber (1) comprises: a plurality of cores (2) that include one or more elements from an alkali metal element group which includes alkali metal elements and alkaline earth metal elements; and a cladding (3) that surrounds the cores and that has a refractive index which is lower than that of the cores. In a cross-section orthogonal to the fiber axis, the difference between the maximum value of residual stress on a line segment (L) connecting the centers of adjacent cores among the plurality of cores and the average value of the residual stress of the plurality of cores (2) is not more than 30 MPa.

**FIG. 1**

EP 4 682 598 A1

## Description

TECHNICAL FIELD

The present disclosure relates to a multi-core optical fiber. This application claims priority based on Japanese Patent Application No. 2023-040847 filed on March 15, 2023, and the entire contents of which are incorporated herein by reference.

BACKGROUND ART

In general, in a case where a core made of silica-based glass contains an alkali metal element or an alkaline-earth metal element, when manufacturing an optical fiber by drawing an optical fiber preform, since viscosity of the core is reduced, and rearrangement of glass is promoted, a transmission loss caused by Rayleigh scattering of the optical fiber is reduced. Hereinafter, both the alkali metal element and the alkaline-earth metal element are referred to as an "alkali metal element group". Patent literature 1 to Patent literature 3 disclose a multi-core optical fiber (hereinafter, MCF) in which a core made of silica-based glass contains the alkali metal element group.

CITATION LIST

PATENT LITERATURE

Patent literature 1: Japanese Unexamined Patent Application Publication No. 2017-40878
Patent literature 2: Japanese Unexamined Patent Application Publication No. 2017-75061
Patent literature 3: Japanese Unexamined Patent Application Publication No. 2017-161705

NON PATENT LITERATURE

Non-patent literature 1: M. Koshiba, K. Saitoh, and Y. Kokubun, "Heterogeneous multi-core fibers: proposal and design principle", IEICE Electron. Express, vol. 6, no. 2, pp. 98-103, Jan. 2009.

SUMMARY OF INVENTION

An MCF according to one aspect of the present disclosure is an MCF formed of silica-based glass, and includes a plurality of cores each containing at least one element selected from an alkali metal element group consisting of an alkali metal element and an alkaline-earth metal element, and a cladding configured to surround the plurality of cores and having a refractive index lower than a refractive index of each of the plurality of the cores. In a cross-section orthogonal to a fiber axis, a difference between a maximum value of residual stresses on a line segment connecting centers of adjacent cores among the plurality of cores and an average value of residual stresses of the plurality of cores is 30 MPa or less. In the present specification, the difference (that is, stress difference) refers to $\sigma_{max} - \sigma_c$, not $|\sigma_{max} - \sigma_c|$, when the maximum value (that is, maximum stress of the line segment between the cores) is $\sigma_{max}$ and the average value (that is, average stress of the plurality of cores) is $\sigma_c$.

BRIEF DESCRIPTION OF THE DRAWINGS

[FIG. 1] FIG. 1 is a diagram showing a cross-section orthogonal to a fiber axis of an MCF and a refractive index distribution according to an embodiment.
[FIG. 2] FIG. 2 is a flowchart showing a method for manufacturing an MCF according to an embodiment.
[FIG. 3] FIG. 3 is a table summarizing items of each MCF that has been manufactured and evaluated.
[FIG. 4] FIG. 4 is a graph showing a relationship between a stress difference and a transmission loss of a first core.
[FIG. 5] FIG. 5 is a table summarizing items of each MCF that has been manufactured and evaluated.
[FIG. 6] FIG. 6 is a graph showing a relationship between a percentage of a compressive stress cross-sectional area in a fiber cross-sectional area and a transmission loss.
[FIG. 7] FIG. 7 is a cross-sectional view showing an example of a stress distribution of an MCF.

DETAILED DESCRIPTION

[Problems to be Solved by Present Disclosure]

Patent literature 3 describes that transmission loss is reduced by a region between adjacent cores being under compressive stress. However, the transmission loss may not be sufficiently reduced only by the region between adjacent cores being under compressive stress.
The present disclosure provides an MCF with sufficiently reduced transmission loss.

[Advantageous Effects of Present Disclosure]

According to the present disclosure, an MCF with sufficiently reduced transmission loss can be provided.

[Description of Embodiments of Present Disclosure]

First, embodiments of the present disclosure will be listed and described.

(1) An MCF according to a first aspect of the present disclosure is an MCF formed of silica-based glass, and includes a plurality of cores each containing at least one element selected from an alkali metal element group consisting of an alkali metal element and an alkaline-earth metal element, and a cladding configured to surround the plurality of cores and having a refractive index lower than a refractive index of each of the plurality of the cores. In a cross-section orthogonal to a fiber axis, a difference between a maximum value of residual stresses on a line segment connecting centers of adjacent cores among the plurality of cores and an average value of residual stresses of the plurality of cores is 30 MPa or less. In the MCF, transmission loss is sufficiently reduced.

(2) In the above (1), the difference may be -10 MPa to 10 MPa. In this case, the transmission loss is further reduced.

(3) An MCF according to a second aspect of the present disclosure is an MCF formed of silica-based glass, and includes a plurality of cores each containing at least one element selected from an alkali metal element group consisting of an alkali metal element and an alkaline-earth metal element, and a cladding configured to surround the plurality of cores and having a refractive index lower than a refractive index of each of the plurality of the cores. In a cross-section orthogonal to a fiber axis, an area of a region under a compressive stress is 40% or less of an area of an entire region. In the MCF, transmission loss is sufficiently reduced.

(4) In the above (3), the area of the region under the compressive stress may be 30% or less of the area of the entire region. In this case, the transmission loss is further reduced.

(5) In the above (3) or (4), the area of the region under the compressive stress may be 10% or less of the area of the entire region. In this case, the transmission loss is further reliably reduced.

(6) In any one of the above (1) to (5), each of the plurality of cores may contain at least one element of sodium, potassium, rubidium, cesium, or calcium as the alkali metal element group. In this case, viscosity of the core and the vicinity of the core is reduced and rearrangement of glass is promoted, so that the transmission loss caused by Rayleigh scattering of the optical fiber is reduced.

[Details of Embodiments of Present Disclosure]

Specific examples of an MCF of the present disclosure will be described below with reference to the drawings. The present disclosure is not limited to these examples, but is defined by the scope of the claims, and is intended to include all modifications within the meaning and scope equivalent to the scope of the claims. In the description of the drawings, the same elements are denoted by the same reference numerals, and redundant description will be omitted.

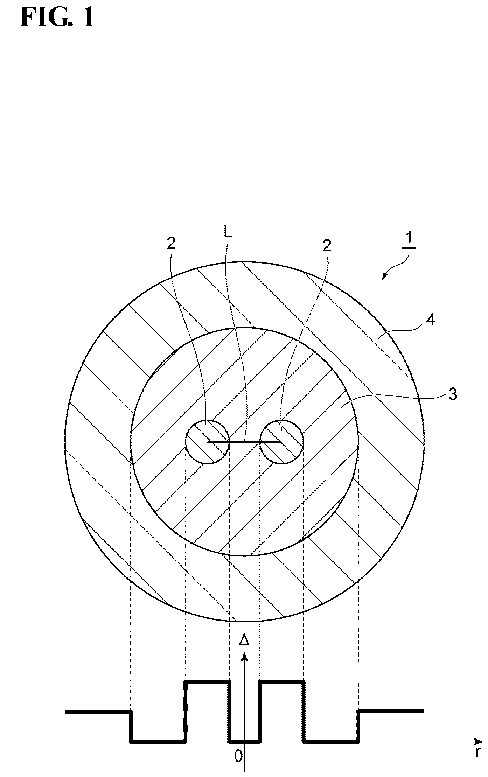

FIG. 1 is a diagram showing a cross-section orthogonal to a fiber axis of an MCF and a refractive index distribution according to an embodiment. As shown in FIG. 1, an MCF1 according to the embodiment includes a plurality of cores 2, a first cladding 3, and a second cladding 4. The MCF1 is formed of silica-based glass. The silica-based glass is glass containing silica as a main component, with a silica content of 97% or more.

The plurality of cores 2 have the same circular shape in a cross-section orthogonal to the fiber axis (hereinafter, also simply referred to as a cross-section). The core 2 extends along the fiber axis. A diameter (core diameter) of the core 2 is, for example, 8 $\mu$m to 15 $\mu$m. In the embodiment, the MCF1 is a two-core optical fiber, and the number of core 2 is two, but there is no limitation thereto. In the cross-section, the two cores 2 are arranged to face each other with the center axis of the MCF1 interposed therebetween. In the cross-section, the two cores 2 are arranged at equal distances from a fiber center. In the cross-section, a length of a line segment L connecting centers of two adjacent cores 2 among the plurality of cores 2 is, for example, 20 $\mu$m to 50 $\mu$m. The length of the line segment L is a distance between centers of the cores 2. The line segment L has portions located on two adjacent cores 2 and a portion located on the first cladding 3.

The plurality of cores 2 have the same refractive index. The plurality of cores 2 may have refractive indices different from each other. An average cut-off wavelength of the plurality of cores 2 is, for example, 1300 nm to 1530 nm. An average effective area of the plurality of cores 2 at a wavelength of 1550 nm is, for example, 75 $\mu$m$^2$ to 160 $\mu$m$^2$.

Each of the plurality of core 2 contains at least one element selected from an alkali metal element group consisting of an alkali metal element and an alkaline-earth metal element. Each of the plurality of cores 2 contains at least one element of sodium, potassium, rubidium, cesium, and calcium as the alkali metal element group. The alkali metal element group may be contained in at least a part of the core 2 in each of the plurality of cores 2. An average concentration of the alkali metal element group of the plurality of cores 2 is, for example, 5 ppm to 100 ppm. Each of the plurality of cores 2 contains, for example, halogen such as chlorine or fluorine.

A method for measuring a concentration of the elements contained in the core 2 is, for example, as follows. An end face of the MCF1 which is orthogonal to the fiber axis is polished, and on the end face, a concentration C(x) at a radial position x of an element that is set as a measurement target is measured along a straight line passing through a central position of the core 2 by an electron probe micro analyzer (EPMA). The radial position x is 0 at the center of the core 2. Here, as measurement conditions by the EPMA, for example, an acceleration voltage is 20 kV, a probe beam diameter is 1 $\mu$m or less, and a measuring interval is 100 nm or less.

When a radius of the core 2 is set as "ra", an average concentration of the element set as a measurement target over the entirety of the core 2 is expressed by the following expression. Note that, in the case where the core 2 contains two or more elements selected from the alkali metal element group, the sum of average concentrations obtained by setting respective elements as a measurement target is set as an average concentration of the alkali metal element group.

[Mathematical Formula 1]

$$\frac{2\int_0^{ra} C(x) \cdot x \cdot \mathrm{d}x}{ra^2}$$

The first cladding 3 and the second cladding 4 are common claddings surrounding the plurality of cores 2. The first cladding 3 covers an outer peripheral surface of each of the plurality of cores 2. In the cross-section, the first cladding 3 has a circular shape. A diameter of the first cladding 3 is, for example, 50 μm to 90 μm. The second cladding 4 covers an outer peripheral surface of the first cladding 3. In the cross-section, the second cladding 4 has a circular shape. A diameter of the second cladding 4 is, for example, 124 μm to 126 μm.

Each of the first cladding 3 and the second cladding 4 has a refractive index lower than a refractive index of the core 2. A refractive index of the second cladding 4 is higher than a refractive index of the first cladding 3. A relative refractive index difference of the second cladding 4 with respect to the refractive index of the first cladding 3 is 0.05% to 0.25%. A relative refractive index difference of the core 2 with respect to the refractive index of the first cladding 3 is 0.25% to 0.50%. In a refractive index distribution in FIG. 1, the vertical axis represents a relative refractive index difference Δ with respect to the refractive index of the first cladding 3, and the horizontal axis represents a radial position r. The radial position r is 0 at a fiber center. The MCF1 is a common depressed type MCF. The first cladding 3 functions as a common depressed cladding.

Residual stress is applied to the MCF1. An average value of the residual stresses of the plurality of cores 2 is, for example, -100 MPa to -20 MPa. Here, the stress is indicated by a positive value in the case of tensile stress and a negative value in the case of compressive stress. That is, the residual stress of the each of the plurality of cores 2 is a compressive stress.

In the cross-section orthogonal to the fiber axis, a difference between the maximum value of the residual stresses on the line segment L and the average value of the residual stresses of the plurality of cores 2 (hereinafter, referred to as a stress difference) is 30 MPa or less. That is, there is no portion having a residual stress that exceeds the average value of the residual stresses of the plurality of cores 2 by more than 30 MPa on the line segment L. This sufficiently reduces transmission loss. The stress difference may be, for example, 20 MPa or less, 10 MPa or less, or -10 MPa or more. The stress difference may be, in particular, -10 MPa to 10 MPa.

In the cross-section, an area of a region under the compressive stress is 40% or less of an area of the entire region of the MCF1. In the cross-section, the area of the region under the compressive stress may be 30% or less of the area of the entire region of the MCF1, or may be 10% or more. The area of the region under the compressive stress may be, in particular, 15% to 25% of the area of the entire region of the MCF1. The measurement of the residual stress of the MCF1 is performed by, for example, an optical system using a microscope and an interferometer.

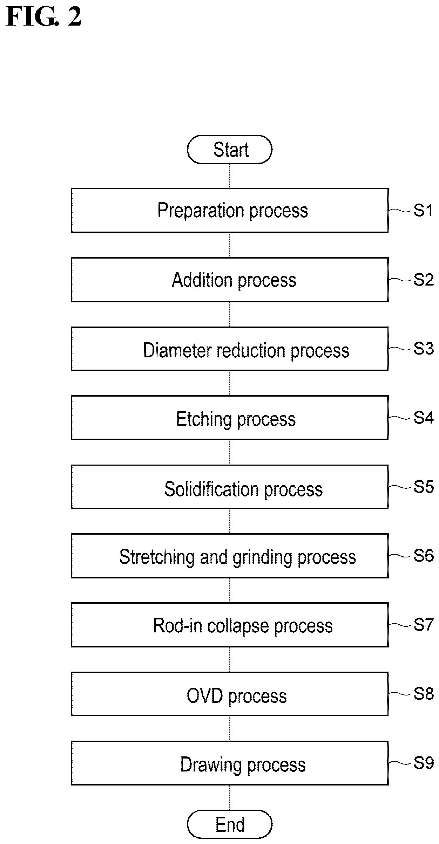

FIG. 2 is a flowchart showing a method for manufacturing the MCF according to the embodiment. As shown in FIG. 2, an example of specific conditions is also described in the following description. As shown in FIG. 2, the MCF1 is manufactured sequentially through a preparation process (step S1), an addition process (step S2), a diameter reduction process (step S3), an etching process (step S4), a solidification process (step S5), a stretching and grinding process (step S6), a rod-in collapse process (step S7), an OVD process (step S8), and a drawing process (step S9).

In the preparation process (step S1), a glass pipe of silica-based glass into which a dopant such as an alkali metal element is to be diffused is prepared. An outer diameter of the glass pipe is 30 mm to 40 mm, and an inner diameter is 15 mm to 25 mm. A cylindrical body of the silica-based glass that is the base of the glass pipe contains chlorine and fluorine. A concentration of chloride and fluoride contained in this cylindrical body is equivalent to a concentration of chloride and fluoride contained in core 2 of the MCF1. A concentration of other dopants and impurities contained in the cylindrical body is 10 ppm or less. The concentration stated here is an average concentration of the entirety of the cylindrical body. A concentration of elements contained in the cylindrical body is measured, for example, by EPMA in a similar manner to in the concentration of the elements contained in the core 2. Measurement conditions may be different from the case of core 2. There is no problem as long as the concentration is calculated by using a calibration curve in each condition.

In the addition process (step S2), a dopant of the alkali metal element group is added to an inner surface of the prepared glass pipe. Here, description will be given of a case of adding a potassium element. As a raw material, potassium bromide (KBr) of 6 g to 50 g is used. The raw material is heated to a temperature of 750°C to 850°C by an external heat source to generate a raw material vapor. The glass pipe is heated from the outside by an oxyhydrogen burner so that an outer surface of the glass pipe reaches a temperature of 1400°C to 2000°C while flowing the raw material vapor to the inside of the glass pipe in combination with a carrier gas containing oxygen in a flow rate of 1 SLM (1 liter/min in terms of standard state). At this time, the heating is performed by traversing the burner at a speed of 30 mm/min to 60 mm/min for a total of 5 turns to 20 turns, and the potassium element is diffused and added to the inner surface of the glass pipe.

In the diameter reduction process (step S3), a diameter of the glass pipe to which the potassium element is added is reduced. At this time, the glass pipe is heated by an external heat source so that the outer surface of the glass pipe reaches 1400°C to 2300°C while flowing oxygen to the inside of the glass pipe at a flow rate of 0.5 SLM to 1.0 SLM. The diameter reduction is performed until the inner diameter of the glass pipe becomes 3 mm to 8 mm by traversing the external heat source for a total of 5 turns to 15 turns for heating the glass pipe.

In the etching process (step S4), the inner surface of the glass pipe is etched. At this time, vapor phase etching is performed by heating the glass pipe with the external heat source while flowing a mixed gas of $SF_6$ (0.2 SLM to 1.0 SLM) and chlorine (0.5 SLM to 1.0 SLM) to the inside of the glass pipe. According to this, the inner surface of the glass pipe to which a high-concentration impurity is added in combination with a desired dopant can be scraped, and the impurity can be removed.

In the solidification process (step S5), the glass pipe is solidified. In the solidification process, a single or mixed gas of oxygen (0.1 SLM to 0.5 SLM) and He (0.5 SLM to 1.0 SLM) flows to the inside of the glass pipe, and the glass pipe is solidified by setting a surface temperature to 2000°C to 2300°C while lowering an absolute pressure inside the glass pipe to a pressure of 97 kPa or less. As a result of the solidification, a glass rod (outer diameter of 20 mm to 30 mm) serving as a core portion is obtained. A core layer that does not contain the alkali metal element group may be applied to an outer side of the glass rod by a known method such as an outside vapor deposition (OVD) method or a collapse method.

In the stretching and grinding process (step S6), the glass rod serving as the core portion is stretched to a diameter of 15 mm to 25 mm, and an outer peripheral portion of the glass rod is further ground to a diameter of 15 mm to 25 mm, thereby obtaining the core portion. Note that, a diameter immediately after stretching is set to be larger than a diameter immediately after grinding. From the preparation process to the stretching and grinding process are performed for the number of the cores 2 of the MCF 1 to obtain a plurality of the core portions. Each of the core portions is a portion serving as the core 2 of the MCF 1.

In the rod-in collapse process (step S7), a first cladding portion is provided on an outer side of each of the plurality of core portions. The first cladding portion is a portion serving as the first cladding 3 of the MCF 1. The plurality of core portions are inserted into the silica-based glass pipe to which fluorine is added, and the rod-in collapse is performed. According to the rod-in collapse method, the plurality of core portions and the silica-based glass pipe to which fluorine is added are heated by an external heat source and are integrated. According to this, the first cladding portion is applied to the peripheries of the plurality of core portions. A relative refractive index difference between the core portions and the first cladding portion is approximately 0.30% to 0.45% at the maximum. As a result of synthesis by the rod-in collapse method, it is possible to sufficiently lower the amount of moisture of the core portions and the first cladding portion in the vicinity of the core portions. A structure of the MCF 1 can be determined by insertion positions of the core portions and the number of the inserted core portions in the process.

In the OVD process (step S8), the rod in which the plurality of core portions and the first cladding portion are integrated with each other is stretched to a predetermined diameter, and a second cladding portion containing fluorine is synthesized to an outer side of the rod by the OVD method. According to this, an optical fiber preform is manufactured. The second cladding portion is a portion serving as the second cladding 4 of the MCF 1.

In the drawing process (step S9), the optical fiber preform is drawn to manufacture the MCF 1. A drawing speed is 600 m/min to 2300 m/min. A drawing tension is 0.1 N to 1.0 N.

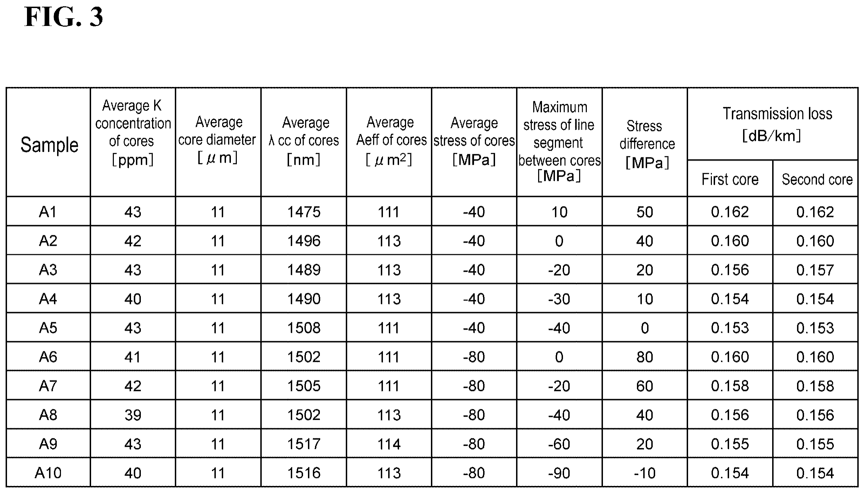

FIG. 3 is a table summarizing items of each MCF that has been manufactured and evaluated. Each of the MCFs in FIG. 3 is a two-core optical fiber including two cores. One of the two cores is referred to as a first core, and the other is referred to as a second core. FIG. 3 shows, for each of the MCFs of samples A1 to A10, an average potassium (K) concentration [ppm] of the two cores, an average core diameter [μm] of the two cores, an average cut-off wavelength ($\lambda$cc) [nm] of the two cores, an average effective area (Aeff) [μm$^2$] of the two cores at a wavelength of 1550 nm, an average stress [MPa] of the two cores, a maximum stress [MPa] of the line segment between the cores, a stress difference [MPa], and a transmission loss [dB/km] of each of the first core and the second core at a wavelength of 1550 nm.

Here, the average stress of the two cores is an average value of the residual stresses of the two cores. The maximum stress of the line segment between the cores is a maximum value of residual stress on a line segment connecting the centers of two cores. The stress difference is a difference between the average stress of the cores and the maximum stress of the line segment between the cores. Each parameter of the second core was a value within ±5% of each parameter of the first core. The average stress of the cores and the maximum stress of the line segment between the cores were changed by controlling the tension (drawing tension) and the drawing speed (drawing speed) during drawing and slow cooling after exiting from the furnace. The residual stress of the MCF is not a calculated value but a measured value measured by an optical system using a microscope and an interferometer.

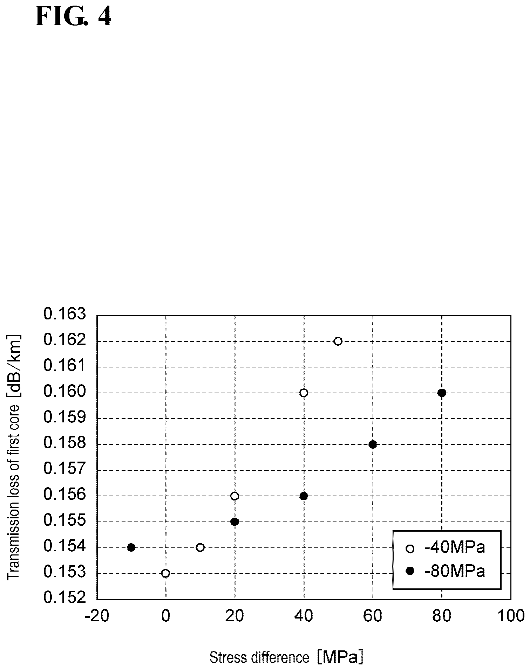

FIG. 4 is a graph showing a relationship between the stress difference and the transmission loss of the first core. Since the transmission loss of the first core and the transmission loss of the second core generally showed the same tendency, the first core is shown as a representative value here. As shown in FIG. 4, a transmission loss of the first core at a wavelength of 1550 nm is reduced to 0.156 dB/km or less when the stress difference is in the range of 30 MPa or less, and the transmission loss is reduced. The transmission loss of the first core at a wavelength of 1550 nm is reduced to 0.154 dB/km or less when the stress difference is in the range of -10 MPa to 10 MPa, and the transmission loss is further reduced. When the average stress of the core was -80 MPa, the transmission loss tended to be lower than when the average stress of the core was -40 MPa.

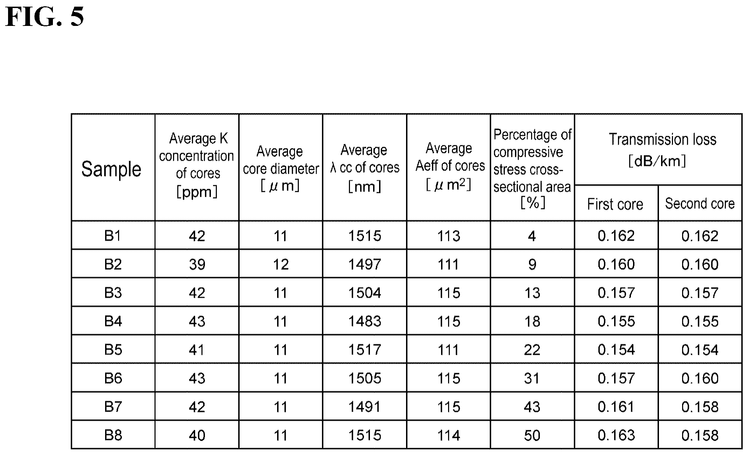

FIG. 5 is a table summarizing items of each MCF that has been manufactured and evaluated. Each of the MCFs in FIG. 5 is a two-core optical fiber having two cores consisting of a first core and a second core. FIG. 5 shows, for each of the MCFs of the samples B1 to B8, an average potassium (K) concentration [ppm] of the two cores, an average core diameter [$\mu$m] of the two cores, an average cut-off wavelength ($\lambda$cc) [nm] of the two cores, the average effective area (Aeff) [$\mu$m$^2$] of the two cores at a wavelength of 1550 nm, a percentage [%] of a compressive stress cross-sectional area, and a transmission loss [dB/km] of each of the first core and the second core at a wavelength of 1550 nm. As described above, the compressive stress herein refers to a case where the residual stress is negative, and the tensile stress refers to a case where the residual stress is positive.

Here, the percentage of the compressive stress cross-sectional area is a ratio of an area of a region under the compressive stress to an area of an entire region in a cross-section orthogonal to the fiber axis, that is, a percentage of the compressive stress cross-sectional area in a fiber cross-sectional area. Each parameter of the second core was a value within $\pm$5% of each parameter of the first core. The percentage of the compressive stress cross-sectional area was changed by controlling the tension (drawing tension) and the drawing speed (drawing speed) during drawing, and slow cooling after exiting from the furnace. The residual stress of the MCF is not a calculated value but a measured value measured by an optical system using a microscope and an interferometer. The percentage of the compressive stress cross-sectional area in the fiber cross-sectional area was calculated from a residual stress distribution of the MCF as follows. First, the residual stress distribution of the MCF was divided into grids each having a side of 1 $\mu$m or less. Subsequently, the value obtained by summing the areas of all the grids was defined as a fiber cross-sectional area Aall. In addition, the value obtained by summing the areas of the grids having a negative value of the residual stress, that is, the grids under the compressive stress was defined as a compressive stress cross-sectional area Arg. Arg/Aall was calculated from All and Arg obtained in this manner, and was defined as the percentage of the compressive stress cross-sectional area in the fiber cross-sectional area.

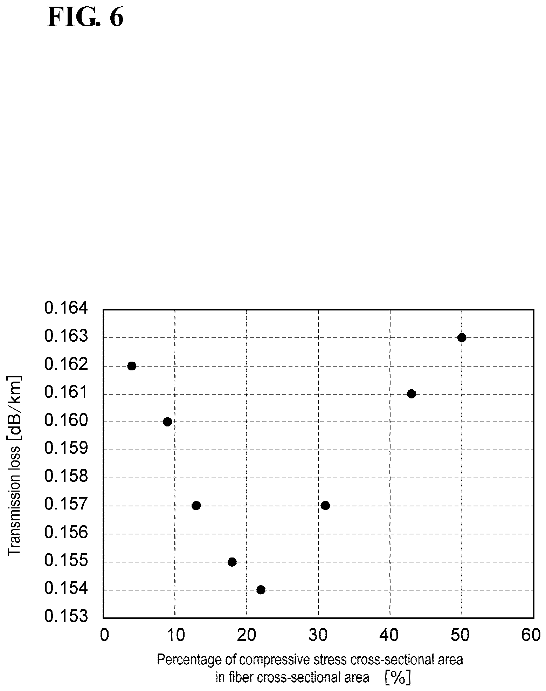

FIG. 6 is a graph showing a relationship between the percentage of the compressive stress cross-sectional area in the fiber cross-sectional area and a transmission loss. Since the transmission loss of the first core and the transmission loss of the second core generally showed the same tendency, the first core is shown as a representative value here. As shown in FIG. 6, the transmission loss was particularly reduced when the percentage of the compressive stress cross-sectional area in the fiber cross-sectional area was in the range of about 15% to 25%. When the percentage of the compressive stress cross-sectional area in the fiber cross-sectional area is smaller or larger than this range, the transmission loss tends to increase. The reason for this is considered as follows.

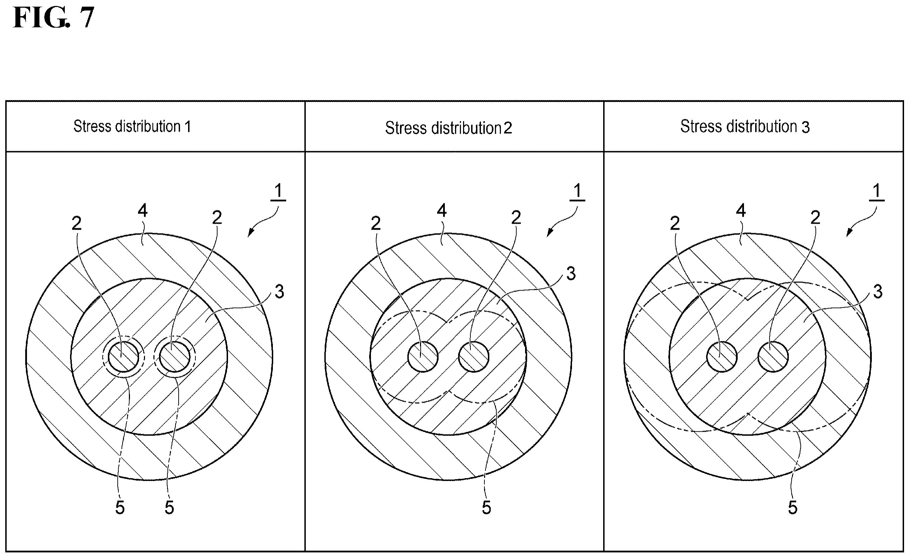

FIG. 7 is a cross-sectional view showing an example of a stress distribution of the MCF. In FIG. 7, a region under the compressive stress is indicated by a two-dot chain line. A stress distribution 1 simulates a case where the percentage of the compressive stress cross-sectional area in the fiber cross-sectional area is 15% or less. In the stress distribution 1, only two cores 2 and the vicinity thereof are under the compressive stress, and a region under tensile stress is present between the two cores 2. In the stress distribution 1, it is considered that the transmission loss increases due to the region under the tensile stress between the cores 2.

A stress distribution 2 simulates a case where the percentage of the compressive stress cross-sectional area in the fiber cross-sectional area is about 15% to 25%. In the stress distribution 2, regions under the compressive stress with each core as a center overlap each other between two cores, and a region under the tensile stress is not present between two cores 2.

A stress distribution 3 simulates a case where the percentage of the compressive stress cross-sectional area in the fiber cross-sectional area is larger than 25%. In the stress distribution 3, although there is no region under the tensile stress is present between the core 2 and the core 2, there is a region under the compressive stress is present in most of the second cladding 4. In the stress distribution 3, the area of the region under the compressive stress is generated is too large to apply sufficient compressive stress to the core 2, and thus the transmission loss is considered to increase.

Although embodiments have been described above, the present disclosure is not necessarily limited to the above-described embodiments and modifications, and various changes can be made without departing from the scope of the present disclosure.

For example, two adjacent cores 2 among the plurality of cores 2 may have different shapes from each other. Two adjacent cores 2 may have, for example, different core diameters. Two adjacent cores 2 may have different refractive indices.

REFERENCE SIGNS LIST

1 multi-core optical fiber
2 core
3 first cladding
4 second cladding
L line segment

**Claims**

1. A multi-core optical fiber formed of silica-based glass comprising:

   a plurality of cores each containing at least one element selected from an alkali metal element group consisting of an alkali metal element and an alkaline-earth metal element; and
   a cladding configured to surround the plurality of cores and having a refractive index lower than a refractive index of each of the plurality of the cores, wherein
   in a cross-section orthogonal to a fiber axis, a difference between a maximum value of residual stresses on a line segment connecting centers of adjacent cores among the plurality of cores and an average value of residual stresses of the plurality of cores is 30 MPa or less.

2. The multi-core optical fiber according to claim 1, wherein
   the difference is -10 MPa to 10 MPa.

3. A multi-core optical fiber formed of silica-based glass comprising:

   a plurality of cores each containing at least one element selected from an alkali metal element group consisting of an alkali metal element and an alkaline-earth metal element; and
   a cladding configured to surround the plurality of cores and having a refractive index lower than a refractive index of each of the plurality of the cores, wherein
   in a cross-section orthogonal to a fiber axis, an area of a region under a compressive stress is 40% or less of an area of an entire region.

4. The multi-core optical fiber according to claim 3, wherein
   in the cross-section, the area of the region under the compressive stress is 30% or less of the area of the entire region.

5. The multi-core optical fiber according to claim 3 or 4, wherein

in the cross-section, the area of the region under the compressive stress is 10% or more of the area of the entire region.

6. The multi-core optical fiber according to any one of claims 1 to 5, wherein
   each of the plurality of cores contains at least one element of sodium, potassium, rubidium, cesium, or calcium as the alkali metal element group.

7. The multi-core optical fiber according to any one of claims 1 to 6, wherein
   an average concentration of the alkali metal element group of the plurality of cores is 5 ppm to 100 ppm.

8. The multi-core optical fiber according to any one of claims 1 to 7, wherein

   the cladding includes a common first cladding covering an outer peripheral surface of each of a plurality of cores 2 and a common second cladding covering an outer peripheral surface of the first cladding,
   a refractive index of the second cladding is higher than a refractive index of the first cladding,
   a relative refractive index difference of each of the plurality of cores with respect to the refractive index of the first cladding is 0.25% to 0.50%, and
   a relative refractive index difference of the second cladding with respect to the refractive index of the first cladding is 0.05% to 0.25%.

9. The multi-core optical fiber according to any one of claims 1 to 8, wherein
   the multi-core optical fiber is a two-core optical fiber.

10. The multi-core optical fiber according to any one of claims 1 to 9, wherein
    in the cross-section orthogonal to the fiber axis, a line segment line segment connecting the centers of adjacent cores among the plurality of cores has a length of 20 $\mu$m to 50 $\mu$m.

11. The multi-core optical fiber according to any one of claims 1 to 10, wherein
    the average value of the residual stresses that are compressive stresses of the plurality of cores is -100 MPa to -20 MPa.

12. The multi-core optical fiber according to claim 1, wherein
    the difference is 20 MPa or less.

13. The multi-core optical fiber according to any one of claims 3 to 5, wherein
    in the cross-section, the area of the region under the compressive stress is 15% to 25% of the area of the entire region.

14. The multi-core optical fiber according to any one of claims 1 to 13, wherein
an average cut-off wavelength of the plurality of cores is 1300 nm to 1530 nm.

15. The multi-core optical fiber according to any one of claims 1 to 14, wherein
an average effective area of the plurality of cores at a wavelength of 1550 nm is 75 $\mu$m$^2$ to 160 $\mu$m$^2$.

# FIG. 1

# FIG. 2

```
          ( Start )

┌─────────────────────────────┐
│     Preparation process      │──S1
└─────────────────────────────┘

┌─────────────────────────────┐
│       Addition process       │──S2
└─────────────────────────────┘

┌─────────────────────────────┐
│   Diameter reduction process │──S3
└─────────────────────────────┘

┌─────────────────────────────┐
│       Etching process        │──S4
└─────────────────────────────┘

┌─────────────────────────────┐
│     Solidification process   │──S5
└─────────────────────────────┘

┌─────────────────────────────┐
│  Stretching and grinding process │──S6
└─────────────────────────────┘

┌─────────────────────────────┐
│     Rod-in collapse process  │──S7
└─────────────────────────────┘

┌─────────────────────────────┐
│         OVD process          │──S8
└─────────────────────────────┘

┌─────────────────────────────┐
│       Drawing process        │──S9
└─────────────────────────────┘

           ( End )
```

## FIG. 3

| Sample | Average K concentration of cores [ppm] | Average core diameter [μm] | Average λ cc of cores [nm] | Average Aeff of cores [μm²] | Average stress of cores [MPa] | Maximum stress of line segment between cores [MPa] | Stress difference [MPa] | Transmission loss [dB/km] | |
|--------|------|------|------|------|------|------|------|------|------|
| | | | | | | | | First core | Second core |
| A1 | 43 | 11 | 1475 | 111 | -40 | 10 | 50 | 0.162 | 0.162 |
| A2 | 42 | 11 | 1496 | 113 | -40 | 0 | 40 | 0.160 | 0.160 |
| A3 | 43 | 11 | 1489 | 113 | -40 | -20 | 20 | 0.156 | 0.157 |
| A4 | 40 | 11 | 1490 | 113 | -40 | -30 | 10 | 0.154 | 0.154 |
| A5 | 43 | 11 | 1508 | 111 | -40 | -40 | 0 | 0.153 | 0.153 |
| A6 | 41 | 11 | 1502 | 111 | -80 | 0 | 80 | 0.160 | 0.160 |
| A7 | 42 | 11 | 1505 | 111 | -80 | -20 | 60 | 0.158 | 0.158 |
| A8 | 39 | 11 | 1502 | 113 | -80 | -40 | 40 | 0.156 | 0.156 |
| A9 | 43 | 11 | 1517 | 114 | -80 | -60 | 20 | 0.155 | 0.155 |
| A10 | 40 | 11 | 1516 | 113 | -80 | -90 | -10 | 0.154 | 0.154 |

EP 4 682 598 A1

FIG. 4

# FIG. 5

EP 4 682 598 A1

| Sample | Average K concentration of cores [ppm] | Average core diameter [$\mu$m] | Average $\lambda$ cc of cores [nm] | Average Aeff of cores [$\mu$m²] | Percentage of compressive stress cross-sectional area [%] | Transmission loss [dB/km] | |
|---|---|---|---|---|---|---|---|
| | | | | | | First core | Second core |
| B1 | 42 | 11 | 1515 | 113 | 4 | 0.162 | 0.162 |
| B2 | 39 | 12 | 1497 | 111 | 9 | 0.160 | 0.160 |
| B3 | 42 | 11 | 1504 | 115 | 13 | 0.157 | 0.157 |
| B4 | 43 | 11 | 1483 | 115 | 18 | 0.155 | 0.155 |
| B5 | 41 | 11 | 1517 | 111 | 22 | 0.154 | 0.154 |
| B6 | 43 | 11 | 1505 | 115 | 31 | 0.157 | 0.160 |
| B7 | 42 | 11 | 1491 | 115 | 43 | 0.161 | 0.158 |
| B8 | 40 | 11 | 1515 | 114 | 50 | 0.163 | 0.158 |

# FIG. 6

# FIG. 7

| Stress distribution 1 | Stress distribution 2 | Stress distribution 3 |
|---|---|---|

EP 4 682 598 A1

## INTERNATIONAL SEARCH REPORT

| | International application No. |
|---|---|
| | **PCT/JP2024/004890** |

**A. CLASSIFICATION OF SUBJECT MATTER**

*G02B 6/02*(2006.01)i
FI:  G02B6/02 461; G02B6/02 376A

According to International Patent Classification (IPC) or to both national classification and IPC

**B. FIELDS SEARCHED**

Minimum documentation searched (classification system followed by classification symbols)

G02B6/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2017-161705 A (SUMITOMO ELECTRIC INDUSTRIES, LTD.) 14 September 2017 (2017-09-14)<br>    paragraphs [0013], [0026]-[0056], fig. 1-6 | 1-2, 6-7, 10-12, 14-15 |
| Y | | 3-5, 8-9, 13 |
| Y | WO 2022/059699 A1 (THE FURUKAWA ELECTRIC CO., LTD.) 24 March 2022 (2022-03-24)<br>    paragraph [0041], fig. 6 | 3-5, 8-9, 13 |
| Y | WO 2022/085534 A1 (SUMITOMO ELECTRIC INDUSTRIES, LTD.) 28 April 2022 (2022-04-28)<br>    paragraph [0031], fig. 2 | 8-9 |
| A | US 2022/0043201 A1 (CORNING INC.) 10 February 2022 (2022-02-10)<br>    entire text, all drawings | 1-15 |

☐ Further documents are listed in the continuation of Box C.      ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **25 March 2024** | **09 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/004890**

| Patent document cited in search report | | | Publication date (day/month/year) | Patent family member(s) | | | Publication date (day/month/year) |
|---|---|---|---|---|---|---|---|
| JP | 2017-161705 | A | 14 September 2017 | US paragraphs [0019], [0032]-[0062], fig. 1A-6B CN | 2017/0261685 107179581 | A1 A | |
| WO | 2022/059699 | A1 | 24 March 2022 | US paragraph [0043], fig. 6 CN | 2023/0204853 116097141 | A1 A | |
| WO | 2022/085534 | A1 | 28 April 2022 | US paragraph [0045], fig. 2 EP CN | 2023/0333311 4234507 116368105 | A1 A1 A | |
| US | 2022/0043201 | A1 | 10 February 2022 | WO | 2022/035630 | A1 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023040847 A
- JP 2017040878 A
- JP 2017075061 A
- JP 2017161705 A

**Non-patent literature cited in the description**

- **M. KOSHIBA** ; **K. SAITOH** ; **Y. KOKUBUN**. Heterogeneous multi-core fibers: proposal and design principle. *IEICE Electron. Express*, January 2009, vol. 6 (2), 98-103